# EUROPÄISCHE PATENTSCHRIFT

(11) **EP 1 710 172 B1**
(45) Veröffentlichungstag und Bekanntmachung des Hinweises auf die Patenterteilung: **07.03.2007**
(21) Anmeldenummer: 05405281.6
(22) Anmeldetag: 04.04.2005
(51) Int. Cl.: B65D 85/804, A47J 31/40

(54) **Vorrichtung und Wegwerfkapsel zur Erzeugung von flüssigen Produkten, insbesondere Getränken**
Apparatus and disposable cartridge for preparing liquid products, in particular drinks
Dispositif et cartouche jetable pour la préparation de produits liquides, en particulier de boissons

(43) Veröffentlichungstag der Anmeldung: 11.10.2006
(73) Patentinhaber: Amann, Beatrice, Dr.med., 8008 Zürich (CH); Alaimo, Maurizio, 4623 Neuendorf (CH)
(72) Erfinder: Alaimo, Maurizio, 4623 Neuendorf (CH); Amann, Beatrice, Dr.med., 8008 Zürich (CH)
(74) Vertreter: Luchs, Willi

(56) Entgegenhaltungen:
- EP-A- 0 554 469
- US-A1- 2002 078 831
- US-A1- 2003 089 245
- US-B1- 6 240 832

## Beschreibung

Die Erfindung betrifft eine Wegwerfkapsel zur Erzeugung von flüssigen Produkten, insbesondere Getränken, gemäss dem Oberbegriff des Anspruches 1 sowie eine Vorrichtung nach Anspruch 6.

Eine Vorrichtung dieser Art ist beispielsweise aus der US 6 026 732 bekannt. Sie weist einen Kapselhalter auf, in welchen eine becherförmige und mit einem Deckel verschlossene Wegwerfkapsel mit dem Deckel nach unten auf eine Extraktionsplatte gelegt wird, und der mit einem Infusionsmodul zusammenfügbar ist, wobei die Wegwerfkapsel zwecks Flüssigkeitszuführung von oben durchstochen und auch der Deckel durch die Extraktionsplatte perforiert wird. Der Kapselhalter weist einen sich konisch verjüngenden Boden mit einem zentralen Auslaufkanal auf. Das aus dem perforierten Deckel austretende fertige Getränk fliesst über den Boden und durch den Auslaufkanal des Kapselhalters in einen darunter gestellten Behälter. Bei dieser Vorrichtung hat das Getränk mit dem die Flüssigkeit zuführenden Teil des Infusionsmoduls, vor allem aber auch mit dem Boden und dem Auslaufkanal des Kapselhalters einen direkten Kontakt.

Dadurch entsteht ein Geschmacks- und ein Hygieneproblem, falls verschiedenartige Produkte bzw. Getränke mit derselben Vorrichtung produziert werden, da immer eine kleine Restflüssigkeit des vorangegangenes Getränkes in das nachfolgende Produkt gelangt und somit ein unerwünschter Nebengeschmack entstehen kann.

Die Druckschrift US-A-2002/078831 beschreibt eine Vorrichtung sowie verschiedene Ausführungen von Wegwerfkapseln zur Erzeugung von Getränken. Unter anderen beschreibt diese Druckschrift eine Wegwerfkapsel gemäß dem Oberbegriff des Anspruchs 1. Die Wegwerfkapseln sind beim Ein- und auch beim Auslass mit einer aus einer Folie oder ähnlichem bestehenden Barriere versehen, welche durch den Wasserdruck entfernbar ist. Zudem ist beim Auslass ein entsprechender Filter vorgesehen, der ein Auslaufen des in der Kapsel enthaltenden Pulvers verhindert. Diese Wegwerfkapsel wird in diese Vorrichtung eingesetzt und das Wasser kann dann über eine Quelle unter Druck eingelassen werden. Nachteilig bei diesen Wegwerfkapseln ist die nicht optimale Verteilung der Flüssigkeit beim Einlass bzw. das Sammeln beim Auslass. Damit kann es passieren, dass das Pulver oder das Granulat in der Kapsel nur unvollständig mit Flüssigkeit durchflossen wird.

Der vorliegenden Erfindung liegt die Aufgabe zugrunde, eine Vorrichtung der eingangs genannten Art sowie eine Wegwerfkapsel für eine derartige Vorrichtung zu schaffen, mit denen es möglich ist, flüssige Produkte verschiedener Art herauszulassen, ohne Einschränkungen bezüglich des Geschmacks oder der Hygiene in Kauf nehmen zu müssen.

Diese Aufgabe wird erfindungsgemäss durch eine Wegwerfkapsel mit den Merkmalen des Anspruches 1 sowie durch eine Vorrichtung mit den Merkmalen des Anspruches 6 gelöst.

Weitere bevorzugte Ausgestaltungen der erfindungsgemässen Vorrichtung sowie der erfindungsgemässen Wegwerfkapsel bilden den Gegenstand der abhängigen Ansprüche.

Die Wegwerfkapsel weist ein einen Hohlraum für das Pulver oder Granulat umschliessendes, formstabiles Gehäuse mit einer einlaufseitigen und einer auslaufseitigen Stirnwand auf. Der Auslaufkanal für das fertige Produkt ist nicht dem Kapselhalter, sondern der auslaufseitigen Stirnwand der Wegwerfkapsel zugeordnet und mit einem Auslaufverschluss versehen. Die einlaufseitige Stirnwand ist mit einem Einlaufkanal ausgestattet, welcher mit einem Einlaufverschluss versehen ist. Sowohl der Einlauf- als auch der Auslaufverschluss werden durch hydraulische Einwirkung der vom Infusionsmodul unter einem vorbestimmten Druck zugeführten Flüssigkeit aufgeschlossen, wobei kein Teil des Infusionsmoduls in das Produkt bzw. Getränk gelangt, und dieses auch mit dem Kapselhalter nicht in Berührung kommt, so dass die Gefahr der Geschmacks- oder Hygiene-Beeinträchtigung bei Erzeugung verschiedenartiger Produkte mit derselben Vorrichtung eliminiert ist. Dies ist gerade für den Aufbau von vollautomatischen Geräten von besonderer Bedeutung, bei welchen per Knopfdruck verschiedene Getränke herausgelassen werden sollen.

Das Aufreissen der beiden Verschlüsse erfolgt durch den Flüssigkeitsdruck allein, d.h. es sind keine zusätzlichen Mittel zum Durchstechen der Wegwerfkapsel notwendig. Dies ermöglicht einen einfachen Aufbau der erfindungsgemässen Vorrichtung.

Die Wegwerfkapsel kann wie bisher in einen Kapselhalter eingelegt und mit diesem an das Infusionsmodul eingespannt werden, oder sie kann in ein im Gerät integriertes Kapselhaltermodul manuell, direkt oder über einen Einschubfach, oder vollautomatisch eingebracht werden, wobei das Infusionsmodul zum Einlaufkanal der im Kapselhalter eingelegten Wegwerfkapsel verstellt wird.

Die Wegwerfkapsel ist derart ausgebildet, dass sich die einlaufseitige Stirnwand vom Einlaufkanal konisch nach unten erweitert und eine Einlaufkammer umschliesst, die vom Hohlraum für das Pulver oder Granulat durch einen Filter getrennt ist. Die über den Einlaufkanal einfliessende Flüssigkeit wird in der Einlaufkammer über die gesamte Kapselfläche verteilt, wodurch die maximale Auswertung des Kapselinhaltes gewährleistet ist. Die auslaufseitige Stirnwand ist ebenfalls vorzugsweise konisch ausgebildet, wobei sie sich nach unten, zum Auslaufkanal hin, verjüngt und eine vom Hohlraum für das Pulver oder Granulat durch ein Sieb getrennte Auslaufkammer umschliesst, in der sich das fertige Produkt sammelt, um über den geöffneten Auslaufkanal ausgelassen zu werden.

Die Erfindung wird nachfolgend anhand der Zeichnung näher erläutert. Es zeigen rein schematisch:
- Fig. 1: eine erfindungsgemässe Vorrichtung zur Erzeugung von flüssigen Produkten, mit einer in einen Kapselhalter eingelegten Wegwerfkapsel und einem Infusionsmodul;
- Fig. 2: die Wegwerfkapsel nach Fig. 1 im vertikalen Querschnitt;
- Fig. 3: ein Ausführungsbeispiel einer Getränkemaschine mit einem an das Infusionsmodul einspannbaren Kapselhalter;
- Fig. 4: ein Ausführungsbeispiel einer halbautomatischen Getränkemaschine mit einem gegenüber einem Kapselhaltermodul verstellbaren Infusionsmodul; und
- Fig. 5: ein Ausführungsbeispiel einer vollautomatischen Getränkemaschine mit einem integrierten Kapselhaltermodul und einem Infusionsmodul.

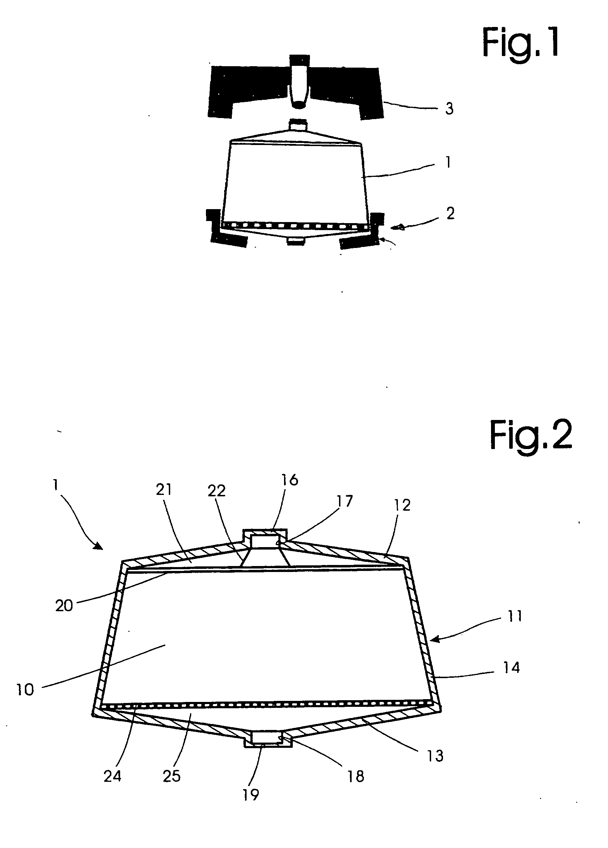

Fig.1 zeigt eine in einen Kapselhalter 2 eingelegte Wegwerfkapsel 1, die eine Portion Pulver oder Granulat enthält, aus welchem durch Extraktion oder Auflösung mit unter Druck stehender Flüssigkeit (in der Regel mit heissem Wasser) ein flüssiges Produkt, insbesondere ein Getränk wie Kaffee, Tee, heisse Schokolade, Bouillon etc., erzeugt werden soll. Zum Einführen der unter Druck stehenden Flüssigkeit in die Wegwerfkapsel 1 ist oberhalb des Kapselhalters ein Infusionsmodul 3 vorhanden. Wie die Flüssigkeit in die Wegwerfkapsel 1 eingeführt wird und wie das fertige Produkt die Wegwerfkapsel 1 verlässt, wird weiter unten beschrieben.

Die erfindungsgemässe Wegwerfkapsel 1 weist gemäss Fig. 2 ein formstabiles Gehäuse 11 mit einer oberen Stirnwand 12, einer unteren Stirnwand 13 und einem die beiden Stirnwände 12, 13 verbindenden zylindrischen bzw. sich leicht konisch nach unten erweiternden Teil 14 auf. Die beiden Stirnwände 12, 13 sind stumpfkegelförmig ausgebildet. Der oberen Stirnwand 12 ist ein zentraler, mit einem Einlaufverschluss 16 versehener Einlaufkanal 17 zugeordnet, von dem sie sich konisch nach unten erweitert. Der unteren Stirnwand 13, mit der die Wegwerfkapsel 1 in den Kapselhalter 2 (Fig. 1) eingelegt wird, ist ein zentraler, mit einem Auslaufverschluss 19 versehener Auslaufkanal 18 zugeordnet, wobei sich die untere Stirnwand 13 zu dem Auslaufkanal 18 konisch nach unten verjüngt.

Der zylindrische oder gemäss Fig. 2 sich leicht konisch nach unten erweiternde Teil 14 des Gehäuses 11 umschliesst einen Hohlraum 10 für das Pulver oder Granulat, welcher durch einen Filter 20 von einer oberen, durch die obere, einlaufseitige Stirnwand 12 umschlossenen Einlaufkammer 21 getrennt ist. Die obere Stirnwand 12 ist vorzugsweise mit mehreren über den Umfang verteilten, radialen Stützrippen 22 für den Filter 20 versehen. Nach unten ist der Hohlraum 10 für das Pulver oder Granulat durch ein Sieb 24 (und allenfalls noch einen Filter) von einer durch die untere Stirnwand 13 umschlossenen und sich zum Auslaufkanal 18 konisch verjüngenden Auslaufkammer 25 getrennt.

Die unbenutzte Wegwerfkapsel 1 befindet sich in einem luftdicht verschlossenem Zustand. Für die Erzeugung des flüssigen Produktes, in der Regel eines Getränkes (es könnte sich auch um eine Suppe oder aber auch z.B. um ein flüssiges Medikament o.Ä. handeln) wird der Einlaufkanal 17 mit dem Infusionsmodul 3 in Verbindung gebracht. Sowohl der Einlaufverschluss 16 als auch der Auslaufverschluss 19 sind derart ausgebildet, dass sie allein durch hydraulische Einwirkung der vom Infusionsmodul 3 unter Druck zugeführten Flüssigkeit aufschliessbar sind. Der benötigte Druck dazu wird für die verschiedenen Produkte spezifisch definiert und ist massgebend für die Produktqualität.

Die über den aufgeschlossenen Einlaufkanal 17 einfliessende Flüssigkeit wird über die einlaufseitige, obere Stirnwand 12 über die gesamte Kapselfläche verteilt, wodurch die maximale Auswertung des Kapselinhaltes gewährleistet wird. Der in der Wegwerfkapsel 1 integrierte Filter 20 filtriert die einfliessende Flüssigkeit und verhindert zugleich einen allfälligen Rückfluss des Produktes bzw. des Kapselinhaltes. Das fertige Produkt fliesst durch das als Filter wirkende Sieb 24 hindurch und sammelt sich in der Auslaufkammer 25, um letztendlich über den rein hydraulisch aufgeschlossenen Auslaufkanal 18 ausgelassen zu werden, der sich dann öffnet, wenn sich in der Kapsel ein bestimmter Druck aufgebaut hat.

Die stumpfkegelförmige Ausbildung der beiden Stirnwände 12, 13 ist zwar nicht zwingend notwendig, jedoch für die optimale Auswertung des Kapselinhaltes und optimale Entleerung des fertigen Produktes aus der Kapsel von besonderem Vorteil.

Bei Verwendung der erfindungsgemässen Wegwerfkapsel 1 kann die Vorrichtung zur Erzeugung von flüssigen Produkten durch Extraktion oder Auflösung des in der Wegwerfkapsel enthaltenen Pulvers oder Granulats mit einer unter Druck stehenden Flüssigkeit einen besonders einfachen Aufbau aufweisen, da keine einlauf- und/oder auslaufseitige mechanische Mittel zum Durchstechen der Wegwerfkapsel 1 benötigt werden. Somit wird erfindungsgemäss sichergestellt, dass das flüssige Produkt weder einlaufseitig mit irgendeinem Teil des Infusionsmoduls noch auslaufseitig mit dem Kapselhalter in Berührung kommt, was eine Geschmacks- oder Hygiene-Beeinträchtigung bei Erzeugung verschiedenartiger Produkte mit derselben Vorrichtung mit sich bringen könnte.

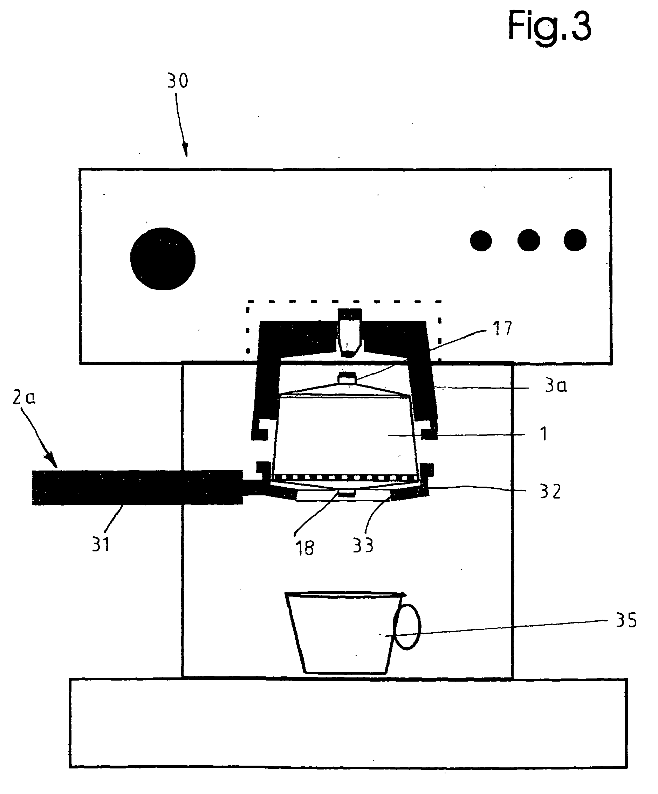

Bei einem in Fig. 3 gezeigten Ausführungsbeispiel einer Getränkemaschine 30 wird die erfindungsgemässe Wegwerfkapsel 1 mit dem gewünschten Inhalt in einen mit einem Handgriff 31 versehenen Kapselhalter 2a eingelegt, und zwar in eine Fassung 32 desselben, deren Öffnung 33 einen wesentlich grösseren Durchmesser aufweist als der Auslaufkannal 18 der Wegwerfkapsel 1. Der Kapselhalter 2a wird von unten an das ortsfest angeordnete Infusionsmodul 3a eingespannt und dabei der verschlossene Einlaufkanal 17 gegenüber dem Infusionsmodul 3a positioniert. Nach der Aktivierung der Getränkemaschine 30 wird das flüssige Produkt in der vorstehend beschriebenen Weise erzeugt, welches durch den geöffneten Auslaufkanal 18 der Wegwerfkapsel 1 in eine Tasse 35 fliesst. Der Kapselhalter 2a wird dann wieder vom Infusionsmodul 3a gelöst, und die verbrauchte Kapsel wird entnommen.

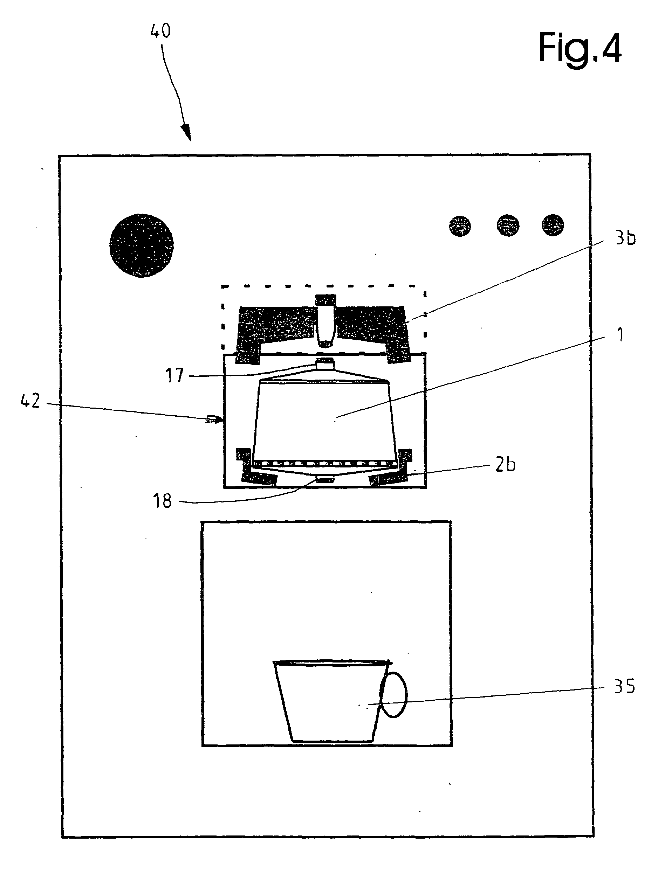

Fig. 4 zeigt ein Ausführungsbeispiel einer halbautomatischen Getränkemaschine 40 mit einem in der Maschine integrierten, einen Kapselhalter 2b aufweisenden Kapselhaltermodul 42. Die Wegwerfkapsel 1 wird in den Kapselhalter 2b manuell eingelegt, was beispielsweise auch über einen dem Kapselhaltermodul 42 zugeordneten Einschubfach, von der Frontseite der Getränkemaschine 40 her, erfolgen kann. Das Infusionsmodul 3b der Getränkemaschine 40 ist gegenüber dem Kapselhaltermodul 42 verstellbar, vorzugsweise vertikal verstellbar angeordnet. Wird die Getränkemaschine 40 aktiviert, so wird das Infusionsmodul 3b zum Einlaufkanal 17 der Wegwerfkapsel 1 bewegt (anstelle einer vertikalen Verstellung wäre auch eine Schwenkbewegung des Infusionsmoduls 3b denkbar), wonach die Produkterzeugung in der bereits beschriebenen Weise erfolgt und das flüssige Produkt durch den geöffneten Auslaufkanal 18 der Wegwerfkapsel 1 in die Tasse 35 ausgelassen wird. Die verbrauchte Wegwerfkapsel 1 fällt anschliessend in einen in der Getränkemaschine 40 integrierten Abfallbehälter, automatisch oder durch manuelle Betätigung, was jedoch aus der Zeichnung nicht ersichtlich ist.

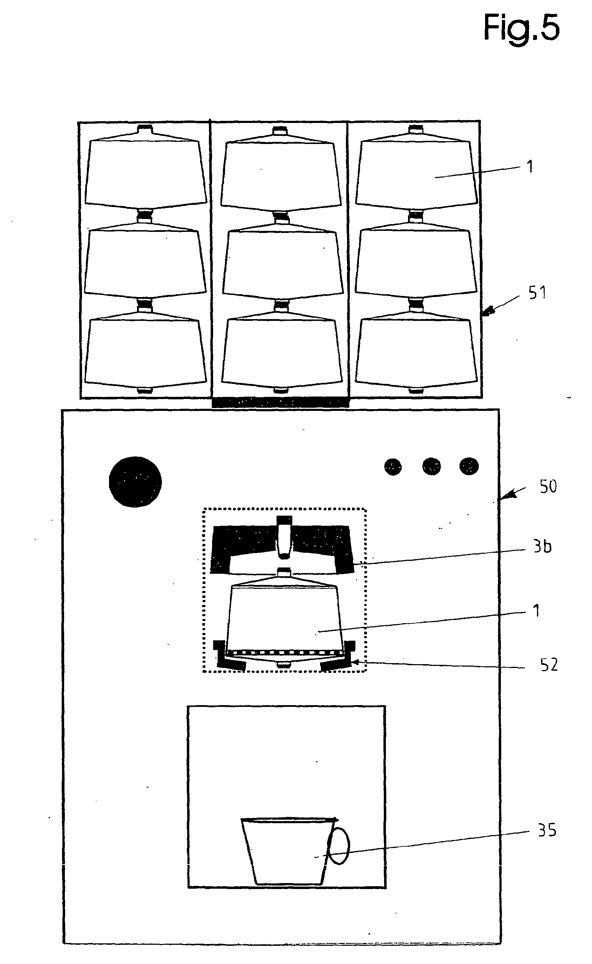

In Fig. 5 ist ein Ausführungsbeispiel einer vollautomatischen Getränkemaschine 50 mit einem integrierten Wegwerfkapsel-Behälter 51 schematisch dargestellt. Die Getränkemaschine 50 ist wiederum mit einem Kapselhalter bzw. Kapselhaltermodul 52 und dem diesem gegenüber verstellbaren Infusionsmodul 3b ausgestattet. Nach elektronischer oder manuellen Getränkewahl wird die Getränkemaschine 50 aktiviert, wonach eine entsprechende Wegwerfkapsel 1 aus dem Wegwerfkapsel-Behälter 51 automatisch zum Kapselhaltermodul 52 transportiert und das Infusionsmodul 3b zum Kapselhaltermodul 52 bewegt wird, bis eine direkte Verbindung mit der Wegwerfkapsel 1 entsteht. Es folgt wiederum die Produkterzeugung in der bereits beschriebenen Weise, und das fertige Produkt fliesst in die Tasse 35. Zuletzt fällt die verbrauchte Wegwerfkapsel 1 automatisch in einen dafür vorgesehenen, in der Getränkemaschine 50 integrierten Abfallbehälter.

Wie bereits erwähnt, können mit allen diesen in Fig. 3 bis 5 als Beispiel dargestellten Getränkemaschinen 30, 40, 50 erfindungsgemäss praktisch beliebige, bezüglich der Hygiene und des Geschmacks qualitativ hochwertige Getränke nacheinander erzeugt werden, ohne dass die einzelnen Teile der Maschine (Infusionsmodul, Kapselhalter) bei Produktwechsel speziell gereinigt werden müssen. Somit sind derartige Getränkemaschinen besonders bedienungs- und wartungsfreundlich.

Die erfindungsgemässen Wegwerfkapseln werden vorzugsweise aus einem umweltfreundlichen Werkstoff, z.B. aus Polypropylen, hergestellt.

## Patentansprüche

1. Wegwerfkapsel für eine Vorrichtung zur Erzeugung von flüssigen Produkten, insbesondere Getränken, durch Extraktion oder Auflösung eines Pulvers oder Granulats, mit einem Einlaufkanal (17) für die Flüssigkeit und einem Auslaufkanal (18) für das Produkt, wobei ein Einlaufverschluss (16) zum Zuführen einer unter Druck stehenden Flüssigkeit, und ein Auslaufverschluss (19) für das fertige Produkt vorgesehen sind, wobei sowohl der Einlaufals auch der Auslaufverschluss (16, 19) durch hydraulische Einwirkung der unter Druck zugeführten Flüssigkeit geöffnet werden können, wobei
die Wegwerfkapsel (1) ein formstabiles Gehäuse (11) mit einem einen Hohlraum (10) für das Pulver oder Granulat umschliessenden Teil (14) sowie mit einer einlaufseitigen und einer auslaufseitigen Stirnwand (12, 13) aufweist, **dadurch gekennzeichnet, dass** eine von der einlaufseitigen Stirnwand (12) begrenzte, vom Einlaufkanal (17) nach unten erweiternde Einlaufkammer (21) gebildet ist, die vom Hohlraum (10) für das Pulver oder Granulat durch einen Filter (20) getrennt ist, und eine von der auslaufseitigen Stirnwand (13) begrenzte und eine sich nach unten zum Auslaufkanal (18) hin verjüngende Auslaufkammer (25) umschliesst, die vom Hohlraum (10) für das Pulver oder Granulat durch ein Sieb (24) getrennt ist.

2. Wegwerfkapsel nach Anspruch 1, **dadurch gekennzeichnet, dass** ein Einlauf- und ein Auslaufkanal (17, 18) beim Einlauf- bzw. beim Auslaufverschluss zentral in der entsprechenden Stirnwand (12, 13) angeordnet sind.

3. Wegwerfkapsel nach Anspruch 2, **dadurch gekennzeichnet, dass** die einlaufseitige Stirnwand (12) stumpfkegelförmig ausgebildet ist.

4. Wegwerfkapsel nach Anspruch 2 oder 3, **dadurch gekennzeichnet, dass** die auslaufseitige Stirnwand (13) stumpfkegelförmig ausgebildet ist.

5. Wegwerfkapsel nach einem der Ansprüche 1 bis 4, **dadurch gekennzeichnet, dass** der die beiden Stirnwände (12, 13) verbindende, den Hohlraum (10) für das Pulver oder Granulat umschliessende Teil (14) des Gehäuses (11) zylindrisch oder sich in Auslaufrichtung leicht konisch erweiternd ausgebildet ist.

6. Vorrichtung zur Erzeugung von flüssigen Produkten, insbesondere Getränken, durch Extraktion oder Auflösung eines in einer Wegwerfkapsel (1) enthaltenen Pulvers oder Granulats mit einer unter Druck stehenden Flüssigkeit, mit einem Infusionsmodul (3, 3a, 3b) zum Einführen der Flüssigkeit in die in einen Kapselhalter (2, 2a, 2b) eingelegte Wegwerfkapsel (1), mit Mitteln zum Herauslassen des fertigen Produktes aus der Wegwerfkapsel (1), und mit einer Wegwerfkapsel (1) nach Anspruch 1.

7. Vorrichtung nach Anspruch 6, **dadurch** gekennzeichet, dass der Kapselhalter (2a) mit der darin eingelegten Wegwerfkapsel (1) an das Infusionsmodul (3a) einspannbar ist und dabei der Einlaufverschluss (16) mit einem anschliessenden Einlaufkanal (17) der Wegwerfkapsel (1) an das Infusionsmodul (3a) anschliessbar ist.

8. Vorrichtung nach Anspruch 6, **dadurch gekennzeichnet, dass** der Kapselhalter (2b) einen Teil eines Kapselhaltermoduls (42, 52) bildet, gegenüber welchem das Infusionsmodul (3b) verstellbar und dabei an den Einlaufkanal (17) der in den Kapselhalter (2b) eingelegten Wegwerfkapsel (1) anschliessbar ist.

9. Vorrichtung nach Anspruch 8, **dadurch gekennzeichnet, dass** die Wegwerfkapsel (1) über einen Einschubfach des Kapselhaltermoduls (42) in den Kapselhalter (2b) einlegbar ist.

10. Vorrichtung nach Anspruch 8, **dadurch gekennzeichnet, dass** die Wegwerfkapsel (1) automatisch aus einem Wegwerfkapsel-Behälter (51) zum Kapselhaltermodul (52) transportierbar ist.

## Claims

1. Disposable capsule for a means for producing liquid products, in particular beverages, by means of extraction or dissolving a powder or granulate, with an inlet channel (17) for the liquid and an outlet channel (18) for the product, whereby an inlet closure (16) for supplying a liquid under pressure and an outlet closure (19) for the finished product are envisaged, whereby the inlet as well as the outlet closure (16, 19) can be opened by means of hydraulic force applied by the liquid supplied under pressure to the disposable capsule (1), whereby a form-stable housing (11) comprises a hollow space (10) for a part (14) containing the powder or granulate as well as an inlet-side and an outlet-side facing wall (12, 13), **characterised in that** an inlet chamber (21) delimited by an inlet-side facing wall (12) and extended in a downward direction by the inlet channel (17) is formed, the same being separated from the hollow space (10) for the powder or granulate by a filter (20), and enclosing an outlet chamber (25) tapered in a downward direction towards the outlet channel (18) and delimited by the outlet-side facing wall (13), separated from the hollow space (10) for the powder or granulate by a sieve (24).

2. Disposable capsule according to Claim 1, **characterised in that** an inlet and an outlet channel (17, 18) are centrally located near the inlet, i.e. the outlet closure in the relevant facing wall (12, 13).

3. Disposable capsule according to Claim 2, **characterised in that** the inlet-side facing wall (12) is of a frustoconical shape.

4. Disposable capsule according to Claim 2 or 3, **characterised in that** the outlet-side facing wall (13) is of a frustoconical shape.

5. Disposable capsule according to one of the Claims 1 to 4, **characterised in that** the part (14) of the housing (11) connecting the two facing walls (12, 13) and enclosing the hollow space (10) for the powder or granulate is cylindrical, or **in that** the same widens slightly in a conical shape in outlet direction.

6. Device for producing liquid products, in particular beverages, by means of extraction or dissolving a powder or granulate contained within a disposal capsule (1) with a liquid under pressure, with an infusion module (3, 3a, 3b) for introducing the liquid into the disposal capsule (1) inserted into a capsule holder (2, 2a, 2b), with means for emptying the finished product from the disposable capsule (1), and with a disposable capsule (1) according to Claim 1.

7. Device according to Claim 6, **characterised in that** the capsule holder (2a) with the disposable capsule (1) inserted into the same can be inserted into the infusion module (3a) and the inlet closure (16) be connected with the infusion module (3a) via an adjacent inlet channel (17) of the disposable capsule (1).

8. Device according to Claim 6, **characterised in that** the capsule holder (2b) forms a part of a capsule holder module (42, 52), in relation to which the infusion module (3b) can be adjusted and connected to the inlet channel (17) of the disposable capsule (1) inserted into the capsule holder (2b).

9. Device according to Claim 8, **characterised in that** the disposable capsule (1) can be inserted into the capsule holder (2b) via an insertion tray of the capsule holder module (42).

10. Device according to Claim 8, **characterised in that** the disposable capsule (1) can be transported from the disposable capsule container (51) to the capsule holder module (52) automatically.

## Revendications

1. Capsule jetable pour dispositif de fabrication de produits liquides, notamment de boissons, par extraction ou dissolution d'une poudre ou d'un granulat, ladite capsule jetable comprenant un canal d'entrée (17) destiné au liquide et un canal de sortie (18) destiné au produit, un dispositif de fermeture d'entrée (16) étant prévu pour amener un liquide sous pression et un dispositif de fermeture de sortie (19) étant prévu pour le produit fini, les dispositifs de fermeture d'entrée et de sortie (16, 19) pouvant tous les deux être ouverts par un effet hydraulique créé par le liquide amené sous pression,
la capsule jetable (1) comprenant un boîtier (11) de forme stable qui comporte une partie (14) renfermant un espace (10) destiné à la poudre ou au granulat ainsi que des parois frontales côté entrée et côté sortie (12, 13), **caractérisée par** la formation d'une chambre d'entrée (21), limitée par la paroi frontale côté entrée (12) et s'évasant vers le bas depuis le canal d'entrée (17), laquelle chambre d'entrée est séparée de l'espace (10) destiné à la poudre ou au granulat par un filtre (20), et d'une chambre de sortie (25), limitée par la paroi frontale côté sortie (13) et s'amincissant vers le bas en direction du canal de sortie (18), laquelle chambre de sortie est séparée de l'espace (10) destiné à la poudre ou au granulat par un tamis (24).

2. Capsule jetable selon la revendication 1, **caractérisée en ce que** des canaux d'entrée et de sortie (17, 18) sont disposés au centre dans la paroi frontale correspondante (12, 13) près du dispositif de fermeture d'entrée respectivement de sortie.

3. Capsule jetable selon la revendication 2, **caractérisée en ce que** la paroi frontale côté entrée (12) est conformée en cône tronqué.

4. Capsule jetable selon la revendication 2 ou 3, **caractérisée en ce que** la paroi frontale côté sortie (13) est conformée en cône tronqué.

5. Capsule jetable selon l'une des revendications 1 à 4, **caractérisée en ce que** la partie (14) du boîtier (11), laquelle relie les deux parois frontales (12, 13) et renferme l'espace (10) destiné à la poudre ou au granulat, est conformée en cylindre ou en cône s'élargissant légèrement vers la sortie.

6. Dispositif de fabrication de produits liquides, notamment de boissons, par extraction ou dissolution d'une poudre ou d'un granulat contenu dans une capsule jetable (1) avec un liquide sous pression, ledit dispositif comportant un module d'infusion (3, 3a, 3b) destiné à introduire le liquide dans la capsule jetable (1) placée dans un support de capsule (2, 2a, 2b), des moyens permettant de faire sortir le produit fini de la capsule jetable (1), et une capsule jetable (1) selon la revendication 1.

7. Dispositif selon la revendication 6, **caractérisé en ce que** le support de capsule (2a), dans lequel est placée la capsule jetable (1), peut être encastré dans le module d'infusion (3a) et le dispositif de fermeture d'entrée (16), auquel se raccorde un canal d'entrée (17) de la capsule jetable (1), peut être raccordé au module d'infusion (3a).

8. Dispositif selon la revendication 6, **caractérisé en ce que** le support de capsule (2b) forme une partie d'un module de support de capsule (42, 52) par rapport auquel le module d'infusion (3b) peut être déplacé et raccordé au canal d'entrée (17) de la capsule jetable (1) placée dans le support de capsule (2b).

9. Dispositif selon la revendication 8, **caractérisé en ce que** la capsule jetable (1) peut être placée dans le support de capsule (2b) par le biais d'un compartiment d'insertion du module de support de capsule (42).

10. Dispositif selon la revendication 8, **caractérisée en ce que** la capsule jetable (1) est transportable automatiquement d'un conteneur de capsules jetables (51) au module de support de capsule (52).
